# EUROPEAN PATENT SPECIFICATION

(11) **EP 2 550 322 B1**
(45) Date of publication and mention of the grant of the patent: **10.06.2020**
(21) Application number: 11709345.0
(22) Date of filing: 19.03.2011
(51) Int. Cl.: C08K 5/5317, C08L 67/02, C08K 5/5313, C08L 85/02

(54) **FLAME RETARDANT COMBINATIONS FOR POLYESTER ELASTOMERS AND FLAME RETARDED EXTRUSION OR MOLDING COMPOSITIONS THEREFROM**
FLAMMHEMMENDE ZUSAMMENSETZUNGEN FÜR POLYESTERELASOTMERE UND FLAMMHEMMENDE EXTRUDIERTE ODER GEFORMTE ZUSAMMENSETZUNGEN DARAUS
COMBINAISONS IGNIFUGES POUR ÉLASTOMÈRES POLYESTER ET COMPOSITIONS IGNIFUGÉES À EXTRUDER OU À MOULER OBTENUES À PARTIR DE CELLES-CI

(30) Priority: 23.03.2010 US 730057
(43) Date of publication of application: 30.01.2013
(73) Proprietor: Clariant Finance (BVI) Limited, Road Town, Tortola (VG); FRX Polymers, Inc., Chelmsford, MA 01824 (US)
(72) Inventor: WANZKE, Wolfgang, 86159 Augsburg (DE); HÖROLD, Sebastian, 86420 Diedorf (DE); SCHLOSSER, Elke, 86163 Augsburg (DE); LEBEL, Marc-andre, 01719 Boxborough (US); FREITAG, Karl, Dieter, 47802 Krefeld (DE)
(74) Representative: Jacobi, Carola
(86) International application number: PCT/EP2011/001348
(87) International publication number: WO 2011/116906

(56) References cited:
- WO-A1-2009/012286
- WO-A2-2009/018336
- DE-A1- 10 317 487

## Description

The invention relates to mixtures of flame retardants for thermoplastic polyester elastomers (TPE-E) based on a phosphinate salt and phosphonate oligomers, polymers and/ or copolymers.

The salts of phosphinic acids (phosphinates) have proven to be effective flame-retardant additives for thermoplastic polymers (DE-A-2 252 258 and DE-A-2 447 727). Calcium phosphinates and aluminum phosphinates have been described as particularly effective in polyesters, giving less impairment of the properties of the polymer molding composition materials than, for example, the alkali metal salts (EP-A-0 699 708).

Synergistic combinations of phosphinates with various nitrogen-containing compounds have also been found and are more effective as flame retardants than the phosphinates alone in a large number of polymers (WO 97/39053, DE-A-1 97 34 437, DE-A-1 97 37 727, and U.S. Pat. No. 6,255,371 B1).

When used as flame retardants for TPE-Es, phosphinates have shown flame retardant activity as well. However, total loadings required to achieve a V-0 classification in the Underwriter Laboratories (UL) 94 test were quite high, regardless of whether they are added alone or in combination with melamine based or other synergists (comparative examples in WO 2008/011941 A1 and examples in EP 1 935 944 A2). Moreover, the relatively high loadings of phosphinates in TPE-E compounds caused some losses in physical properties of the base elastomer.

Polyphosphonates or copolyphosphonates have shown flame retardant activity in a number of engineering plastics as well. However, these polyphosphonates require high loadings in the thermoplastic resin, even with the addition of typical melamine based synergists (US 2009/0043013 A1).

Surprisingly, it has now been found that mixtures of phosphinates with polyphosphonates or copolyphosphonates show synergistic effects regarding the flame retardant action in TPE-Es either with or without using additional nitrogen based components like a melamine derivative in the elastomeric material. A V-0 classification according to UL 94 can be achieved at lower loadings, and the negative impact on physical properties is lessened. The flame retarded TPE-E materials of the present invention also show very good flowability, extrudability and moldability.

The invention therefore provides a flame retardant mixture for thermoplastic polyester elastomers, which comprises, as component A, an aluminium diethylphosphinate.

Examples of the phosphinic acid which is suitable constituent of the phosphinic salt are Diethylphosphinic acid-. According to the invention, the salt of the phosphinic acid may be prepared by known methods, for example those described in more detail in EP-A-699 708. Here, the phosphinic acids are reacted, by way of example, in aqueous solution with metal carbonates, metal hydroxides, or metal oxides.
The invention further comprises, as component B, phosphonate oligomers or polymers or copolymers which are prepared from diphenylmethylphosphonate and 2,2-bis(4-hydroxyphenyl)propane. Linear and branched phosphonate oligomers and polymers are well known in the literature. For branched phosphonate oligomers or polymers see U.S. Pat. Nos. 2,716,101; 3,326,852; 4,328,174; 4,331,614; 4,374,971; 4,415,719; 5,216,113; 5,334,692; 4,374,971 3,442,854; 6,291,630 B1 and 6,861,499 B1. For phosphonate oligomers see U.S. Patent applications 20050020800A1, 20070219295A1 and 20080045673A1. References for linear phosphonate oligomers and polymers include U.S. Pat. Nos. 2,534,252; 3,946,093; 3,919,363; 6,288,210 B1; 2,682,522; 2,891,915 and 4,046,724.

The phosphonate copolymers may be random or block. Random polyesterphosphonates and random polycarbonatophosphonates can be prepared by several methods such as melt condensation from bisphenol, phosphonic acid ester monomers and carboxylic acid ester monomers or from bisphenol, phosphonic acid ester monomers and diphenyl carbonate monomers (See for example, DE-OS (German Published Specification) Nos. 2,925,206 and 2,925,208). The polymers made using these methods are random (or statistical) mixtures of the monomers. Random copolyhosphonates can also be prepared by extrusion of solutions of aromatic polyesters and aromatic polyphosphonates at elevated temperatures (U.S. Pat. No. 4,782,123). In U.S. Pat. No. 4,762,905 thermoplastic polyphosphonatocarbonates are prepared by polycondensation of at least one aromatic dihydroxy compound with a diaryl carbonate and a phosphonic acid diaryl ester in the presence of a basic polycondensation catalyst with heating under reduced pressure. In U.S. Pat. No. 4,508,890 thermoplastic polyphosphonatocarbonates are prepared by polycondensation of at least one aromatic dihydroxy compound with a diaryl carbonate and a phosphonic acid diaryl ester in the presence of a neutral catalyst. Preferred phosphonate copolymers are block copolymers, such as a poly(block-phosphonato-ester) or poly(block-phosphonato- carbonate). These are known and described in published US patent application 20070129511 A1. In some embodiments, at least one phosphonate oligomer or polyphosphonate and one or more polyester or polycarbonate may be linked to one another by a transesterification or polycondensation reaction, and in certain embodiments, the poly(block-phosphonato-ester) and/or poly(block-phosphonato-carbonate) may exhibit a single glass transition temperature (Tg).

The phosphonate oligomers, polymers or copolymers, of embodiments of the invention, may have a relative solution viscosity (ηᵣₑₗ), measured in methylene dichloride, of from about 1.03 to greater than about 1.35. Relative viscosity is the ratio of the time it takes a specific volume of polymer solution to flow through a capillary tube and the corresponding time it takes for the pure solvent. Polyphosphonates not fully soluble or insoluble in methylene dichloride are also appropriate.

The phosphonate oligomers or polymers prepared using bisphenol A may have a Tg of from about 28 °C to about 107 °C. The copolymers can exhibit Tgs as high as 145 °C. In some embodiments the phosphonate oligomer, polymer or copolymer may be branched or linear and may be prepared with up to about 50 mol-% branching agent. In other embodiments, the phosphonate oligomer, polymer or copolymer may have a molecular weight (Mₙ) of from about 2,000 g/mol to about 35,000 g/mol, with a preferred Mₙ of from about 4000 to about 20,000 g/mole.

Phosphonic acid diaryl esters, alternatively called phosphodiesters, used for making oligomeric phosphonates and polyphosphonates may include those of formula (1): 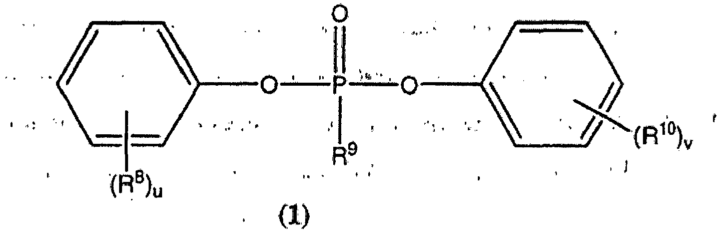 where each (R⁸)u and each (R¹⁰)v can independently be a hydrogen, lower alkyl of C₁-C₄, and u and v are independently integers where u = 1 to 5, and v = 1 to 5; R⁹ is methyl. In embodiments, the phosphonic acid diaryl ester includes methylphosphonic acid diphenyl ester or methyldiphenoxyphosphine oxide where R⁹ is a methyl radical or group.

Phosphodiester, such as those of formula (1), used to prepare oligomeric phosphonate and/or polyphosphonates in embodiments of the invention may have a molar ratio: phosphodiester of structure 1 up to +- 50 mol-% related to bisphenol, in some embodiments up to +-20 mol-%, and in other embodiments up to +- 10 mol-%.

Various dihydroxy aromatic compounds or bisphenols may be used alone or in combination with one another to form oligomeric phosphonates and/or polyphosphonates for use in embodiments of the invention. These dihydroxy aromatic compounds are those of general formula (3): 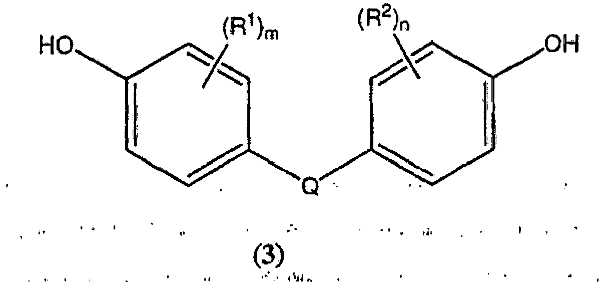 where each (R¹)ₘ and (R²)ₙ can independently be a hydrogen, halogen atom, nitro group, cyano group, C₁ -C₂₀ alkyl group, C₄ -C₂₀ cycloalkyl group, or C₆ -C₂₀ aryl containing group; m and n are independently integers 1 to 4; and Q is the group 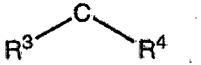 where R³ and R⁴ are each methyl.

One or more bisphenols may be used to prepare oligomeric phosphonates or polyphosphonates, and these bisphenols include bisphenol A or mixtures including other bisphenols of formula (3) such as, but not limited to, 2,2-bis(4-hydroxy-3-methylphenyl)propane, 2,2-bis(3- chloro-4-hydroxyphenyl)propane, 2,2-bis(3-bromo-4-hydroxyphenyl)propane, 2,2-bis(4- hydroxy-3-isopropylphenyl)propane-For example, the amount of bisphenol A, in embodiments of the invention, may range from about 100 % to about 0.5 % relative to other bisphenols. In some embodiments, the phosphorous content of polymers of embodiments of the invention may be controlled by the molecular weight (Mw) of the bisphenol used in the oligomeric phosphonates or polyphosphonates. In particular, a lower molecular weight bisphenol will produce an oligomeric phosphonate or polyphosphonate with a higher phosphorus content.
The phosphorus content, expressed in terms of the weight percentage, of the phosphonate oligomers or polymers may be in the range from 2 % to 18 %. For example, phosphonate oligomers or polymers prepared from bisphenol A have phosphorus contents of 10.8 %. The phosphonate copolymers have a smaller amount of phosphorus content compared to the phosphonate oligomers or polymers. For example, a copolymer containing phosphonate and carbonate components wherein the phosphonate component is comprised of the methyl diphenylphosphonate and bisphenol A at a concentration of 20 % will have only about 2.16 % phosphorus. A preferred range for phosphorus content in a phosphonate oligomer, polymer or copolymer is from about 2 % to about 18 %.

The transesterification catalyst may be any transesterification catalyst. In some embodiments, the transesterification catalyst is a non-neutral transesterification catalyst, such as, for example, phosphonium tetraphenylphenolate, metal phenolate, sodium phenolate, sodium or other metal salts of bisphenol A, ammonium phenolate, non-halogen containing transesterification catalysts and the like, or transesterification catalysts such as those disclosed in PCT Pat. Application Serial Numbers PCT/US 2004005337 and PCTAJS 2004005443 filed Feb. 24, 2004 incorporated herein by reference in their entirety.

The inventive flame retardant mixture optionally comprises, as further component C, melamine condensates, such as melam [(*N2*-(4,6-diamino-1,3,5-triazin-2-yl)-1,3,5-triazine-2,4,6-triamine)], melem (triamino- tri-s-triazine) and/or melon (reaction product of melem and heptazine).

The inventive flame retardant mixture optionally comprises, as further component C, benzoguanamine, allantoin, glycoluril, melamine, melamine cyanurate, dicyandiamide and/or guanidine.The inventive flame retardant mixture preferably comprises, as further component C, nitrogen compounds of the formulae (III) to (VIII), or a mixture thereof 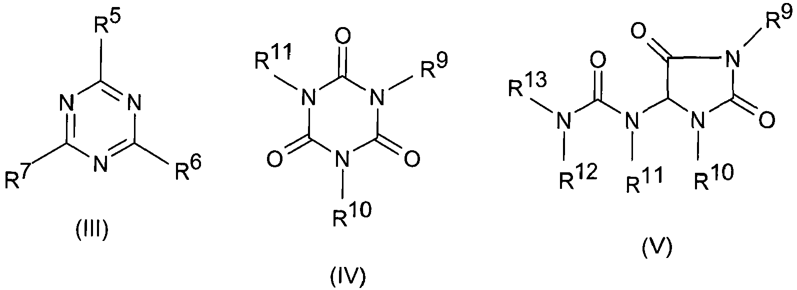 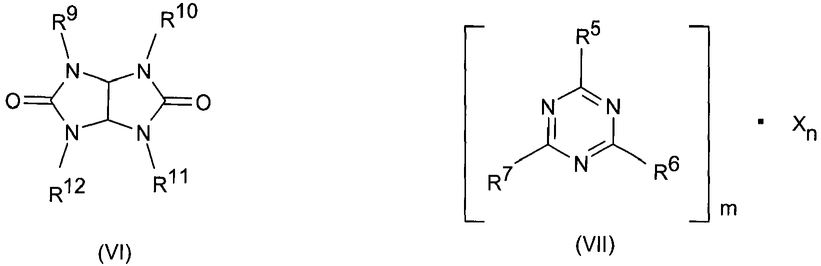 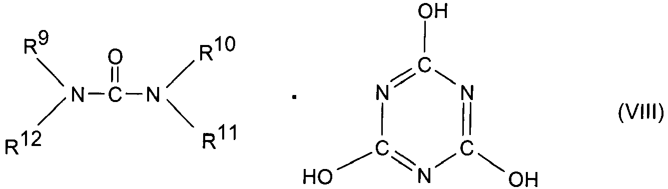 where R⁵ to R⁷ are hydrogen, C₁-C₈-alkyl, or C₅-C₁₆-cycloalkyl or -alkylcycloalkyl, unsubstituted or substituted with a hydroxy function or with a C₁-C₄-hydroxyalkyl function, or are C₂-C₈-alkenyl, C₁-C₈-alkoxy, -acyl, or -acyloxy, or C₆-C₁₂-aryl or -arylalkyl, or -OR⁸ or -N(R⁸)R⁹, including systems of alicyclic-N or aromatic-N type, R⁸ is hydrogen, C₁-C₈-alkyl, C₅-C₆-cycloalkyl or -alkylcycloalkyl, unsubstituted or substituted with a hydroxy function or with a C₁-C₄-hydroxyalkyl function, or is C₂-C₈-alkenyl, C₁-C₈-alkoxy, -acyl, or -acyloxy, or C₆-C₁₂-aryl or -arylalkyl, R⁹ to R¹³ are the groups of R⁸, or else -O-R⁸, m and n, independently of one another, are 1, 2, 3, or 4, X is acids which can form adducts with triazine compounds (III).

The thermoplastic polyester elastomer usually comprises a block copolymer having a structure in which a polyester hard block (a hard block or a hard segment, such as an aromatic polyester) bonds with a polyester soft block (a soft block or a soft segment) through an ester bond. The thermoplastic polyester elastomer can be divided into two classes, a polyether-based one and a polyester-based one, according to the kind of the soft block. Either of these elastomers may be used in the present invention.

A hard polyester constituting the hard block may be obtained by a polycondensation of a dicarboxylic acid and a diol, a polycondensation of a hydroxycarboxylic acid, and others. An aromatic polyester obtained from at least an aromatic monomer component may be usually employed. The aromatic monomer component may include, for example, an aromatic diol and a reactive derivative thereof, an aromatic dicarboxylic acid and terephthalic acid (and a reactive derivative of such an aromatic dicarboxylic acid), and/or an aromatic hydroxycarboxylic acid [for example, hydroxybenzoic acid, hydroxynaphthoic acid, 4-carboxy-4'-hydroxy-biphenyl, and a derivative of such a hydroxycarboxylic acid (e.g., an alkyl-, alkoxy-, or halogen-substituted compound)]. The aromatic monomer components may be used singly or in combination. In the aromatic polyester, if necessary, a copolymerizable monomer (including a copolymerizable monomer, and in addition, 1,4- butanediol, terephthalic acid, and others) may be used in combination.

It is sufficient for the aromatic polyester to use at least the aromatic monomer component as a monomer component. For example, the aromatic polyester may be a fully aromatic polyester (e.g., a polyester of an aromatic dicarboxylic acid and an aromatic diol, and a polyester of an aromatic hydroxycarboxylic acid) or may be a polyester of an aromatic dicarboxylic acid and a non-aromatic diol (e.g., 1, 4-butanediol , and an aliphatic diol or an alicyclic diol) a polyester of a non-aromatic dicarboxylic acid (e.g., an aliphatic dicarboxylic acid) and an aromatic diol, and a polyester of an aromatic hydroxycarboxylic acid and a non-aromatic hydroxycarboxylic acid (e.g., an aliphatic hydroxycarboxylic acid such as glycolic acid or hydroxycaproic acid).

Among these hard polyesters, the preferred one includes a crystalline aromatic polyester [for example, a polyalkylene arylate (e.g., a polyC₂₋₄ alkylene arylate such as a polyethylene terephthalate (PET), a polybutylene terephthalate (PBT), a polyethylene naphthalate, or a polybutylene naphthalate, and a modified polyC₂₋₄ alkylene arylate (e.g., a polyC₂₋₄ alkylene arylate modified or copolymerized with 1 to 30 mol-% (e.g., about 3 to 25 mol-% and preferably about 5 to 20 mol-%) of a copolymerizable component (the above-mentioned copolymerizable monomer such as isophthalic acid)))] and a liquid crystal polyester, particularly, a polybutylene terephthalate or the like.

A more preferred polybutylene terephthalate (PBT) resin may include a homopolyester or a copolyester containing a butyleneterephthalate unit as a main unit (for example, in a proportion of about 50 to 100 % by weight, preferably about 60 to100 % by weight, and more preferably about 70 to 100 % by weight), for example, a polybutylene terephthalate and a polybutylene terephthalate copolyester.

A copolymerizable monomer (or a comonomer) in the copolyester (a butylene terephthalate-series copolymer or a modified PBT resin) may include a dicarboxylic acid other than terephthalic acid, a diol other than 1, 4-butanediol, a hydroxycarboxylic acid, a lactone, and others. The copolymerizable monomers may be used singly or in combination.

The dicarboxylic acid may include, for example, an aliphatic dicarboxylic acid (e.g. a C₄₋₄₀ aliphatic dicarboxylic acid such as succinic acid, glutaric acid, adipic acid, pimelic acid, suberic acid, azelaic acid, sebacic acid, undecanedicarboxylic acid, dodecanedicarboxylic acid, hexadecanedicarboxylic acid, or dimeric acid, preferably a C₄₋₁₄ dicarboxylic acid), an alicyclic dicarboxylic acid (e.g. a C₈₋₁₂ alicyclic dicarboxylic acid such as hexahydrophthalic acid, hexahydroisophthalic acid, hexahydroterephthalic acid, or himic acid), an aromatic dicarboxylic acid other than terephthalic acid (e.g., a C₈₋₁₆ aromatic dicarboxylic acid such as phthalic acid, isophthalic acid; a naphthalenedicarboxylic acid such as 2,6-naphthalenedicarboxylic acid; and 4,4'-diphenyldicarboxylic acid, 4,4'-diphenoxyetherdicarboxylic acid, 4,4'-diphenyletherdicarboxylic acid, 4,4'-diphenylmethanedicarboxylic acid, or 4,4'-diphenylketonedicarboxylic acid), or a reactive derivative thereof [for example, a derivative capable of forming an ester (or an ester-formable derivative), e.g., a lower alkyl ester (e.g., a C₁₋₄ alkyl ester of phthalic acid or isophthalic acid, such as dimethyl phthalate or dimethyl isophthalate (DMI)); an acid chloride; an acid anhydride; and a derivative capable of forming an ester (or an ester-formable derivative), such as an alkyl-, alkoxy-, or halogen-substituted compound of the dicarboxylic acid].

The diol may include, for example, an aliphatic alkylene glycol other than 1,4-butanediol (for example, a lower alkylene glycol such as ethylene glycol, trimethylene glycol, propylene glycol, neopentyl glycol, hexanediol (e.g., 1,6-hexanediol), octanediol (e.g., 1,3-octanediol), or decanediol (e.g., a C₂₋₁₂ alkylene glycol, preferably a C₂₋₁₀ alkylene glycol), a polyoxyalkylene glycol [for example, a glycol having a plurality of oxyC₂₋₄ alkylene units,e.g.,diethylene glycol, dipropylene glycol, ditetramethylene glycol, triethylene glycol, tripropylene glycol, and a polytetramethylene glycol], an alicyclic diol (e.g., 1,4-cyclohexanediol, 1,4-cyclohexanedimethanol, and a hydrogenated bisphenol A), an aromatic diol [for example, a C₆₋₁₄ aromatic diol such as hydroquinone, resorcinol, or naphthalenediol; a biphenol (e.g., 4,4'-dihydroxybiphenyl); a bisphenol compound; and xylylene glycol], and a reactive derivative thereof (e.g., a derivative capable of forming an ester, such as an alkyl-, alkoxy-, or halogen-substituted compound of the diol).

The bisphenol compound may include a bis(hydroxyaryl)C₁₋₆alkane such as bis(4-hydroxyphenyl)methane (bisphenol F), 1,1 -bis(4-hydroxyphenyl)ethane (bisphenol AD), 1,1-bis(4-hydroxyphenyl)propane, 2,2-bis(4-hydroxyphenyl) propane (bisphenol A), 2,2-bis(4-hydroxy-3-methylphenyl)propane 2,2-bis(4-hydroxyphenyl)butane, 2,2-bis(4-hydroxyphenyl)-3-methylbutane, 2,2-bis(4-hydroxyphenyl)hexane, or 2,2-bis(4-hydroxyphenyl)-4-methylpentane; a bis (hydroxyaryl)C₄₋₁₀cycloalkane such as 1,1-bis(4-hydroxyphenyl)cyclopentane or 1,1-bis(4-hydroxyphenyl)cyclohexane; 4,4'-dihydroxydiphenyl ether; 4,4'-dihydroxydiphenyl sulfone; 4,4'-dihydroxydiphenyl sulfide; 4,4'-dihydroxydiphenyl ketone; and an alkylene oxide adduct thereof. The alkylene oxide adduct may include a C₂₋₃alkylene oxide adduct of a bisphenol compound (for example, bisphenol A, bisphenol AD, and bisphenol F), e.g., 2,2-bis-[4-(2-hydroxyethoxy) phenyllpropane, diethoxylated bisphenol A (EBPA), 2,2-bis-[4-(2-hydroxypropoxy)phenyl]propane, and dipropoxylated bisphenol A. In the alkylene oxide adduct, the mole number of the added alkylene oxide (a C₂₋₃alkylene oxide such as ethylene oxide or propylene oxide) may be about 1 to 10 mol and preferably about 1 to 5 mol, relative to each hydroxyl group.

The hydroxycarboxylic acid may include, for example, a hydroxycarboxylic acid such as hydroxybenzoic acid, hydroxynaphthoic acid, hydroxyphenylacetic acid, 4-carboxy-4'-hydroxy-biphenyl, glycolic acid, or hydroxycaproic acid, or a derivative thereof (e.g., an alkyl-, alkoxy-, or halogen-substituted compound), and others. The lactone may include a C₃₋₁₂lactone such as propiolactone, butyrolactone, valerolactone, or caprolactone (e.g., E-caprolactone), and others.

If necessary, these copolymerizable monomers may be used in combination with a polyfunctional compound, for example, a polycarboxylic acid (such as trimesic acid, trimellitic acid, or pyromellitic acid) or a derivative thereof capable of forming an ester (e.g., an alcohol ester), and a polyol (such as glycerin, trimethylolpropane, trimethylolethane, or pentaeythritol) or a derivative thereof capable of forming an ester. The combination use of such a polyfunctional compound allows a branched PBT-series resin.

The preferred copolymerizable monomer includes a diol [for example, a C₂₋₆alkylene glycol (e.g., a straight chain or branched chain alkylene glycol such as ethylene glycol, trimethylene glycol, propylene glycol, or hexanediol), a polyoxyC₂₋₄ alkylene glycol having a repeating oxyalkylene unit of about 2 to 4 (e.g., diethylene glycol), and a bisphenol compound (e.g., a bisphenol compound or an alkylene oxide adduct thereof)], a dicarboxylic acid [for example, a C₆₋₁₂ aliphatic dicarboxylic acid (e.g., adipic acid, pimelic acid, suberic acid, azelaic acid, and sebacic acid), an asymmetrical aromatic dicarboxylic acid having two carboxyl groups at asymmetric positions of an arene ring thereof, and 1,4-cyclohexanedimethanol], and others. Among these compounds, the preferred one includes an aromatic compound, for example, an alkylene oxide adduct of a bisphenol compound (particularly, bisphenol A), and an asymmetrical aromatic dicarboxylic acid [for example, phthalic acid, isophthalic acid, and a reactive derivative thereof (e.g., a lower alkyl ester such as dimethyl isophthalate (DMI))], and others.

A PBT resin having a copolymerizable monomer unit in a proportion (amount) of not more than 30 mol-% (0 to 30 mol-%) a homopolyester (a polybutylene terephthalate) and/or a copolyester (a copolymer) is preferred. In the copolymer, the proportion of the copolymerizable monomer unit may be selected from the range of, for example, about 0.01 to 30 mol-%. The proportion may be usually about 1 to 30 mol-%, preferably about 3 to 25 mol-%, and more preferably about 5 to 20 mol-% (e.g., about 5 to 15 mol-%). The PBT-series resins may be used singly or in combination.

The intrinsic viscosity (IV) of the PBT resin is not particularly limited to a specific one. For example, the intrinsic viscosity (IV) of the PBT resin may be about 0.6 to 1.4 dL/g when measured in o-chlorophenol at 35 °C. In the light of hydrolysis resistance or extrusion workability, the above-mentioned intrinsic viscosity may be preferably about 0.8 to 1.3 dL/g and more preferably about 0.85 to 1.2 dL/g. In the case of too low an intrinsic viscosity, sometimes a desired hydrolysis resistance or a desired extrusion workability (melt tension) cannot be obtained. Moreover, in the case of too high an intrinsic viscosity, there is a possibility that an applied load is increased in an extrusion process.

The PBT resin may be produced by copolymerizing (polycondensing) terephthalic acid or a reactive derivative thereof and 1,4-butanediol and if necessary, a copolymerizable monomer with a conventional manner, for example, transesterification, direct esterification, and others.

A soft polyester constituting the soft block of the polyester-based elastomer may be obtained, in the same manner as a PBT resin, by a polycondensation of a dicarboxylic acid and a diol, a polycondensation of a hydroxycarboxylic acid or a lactone, and others. It is sufficient that the soft polyester is softer than the hard polyester constituting the hard block. Examples of the soft polyester includes, usually, a polyester obtained from at least an aliphatic monomer component [for example, an aliphatic diol (e.g., 1,4-butanediol, and an aliphatic diol and a reactive derivative thereof as exemplified in the paragraph of the PBT resin), an aliphatic dicarboxylic acid (e.g., an aliphatic dicarboxylic acid and a reactive derivative thereof as exemplified in the paragraph of the PBT resin), an aliphatic hydroxycarboxylic acid (e.g., glycolic acid and hydroxycaproic acid), and a lactone as exemplified in the paragraph of the PBT resin]. If necessary, the aliphatic monomer component may be used in combination with a copolymerizable monomer (usually, a non-aromatic monomer component, e.g., an alicyclic diol or an alicyclic dicarboxylic acid and a reactive derivative thereof).

Among these soft polyesters, an amorphous polyester, for example, an aliphatic polyester of an aliphatic dicarboxylic acid and an aliphatic diol, and a polylactone (a ring-opening polymer of the lactone) are preferred.

It is sufficient that the soft segment of the polyether-based elastomer has at least a polyether unit. The soft segment may comprise a polyether [for example, an aliphatic polyether having a polyoxyalkylene unit (e. g., a polyoxyalkylene glycol as exemplified in the paragraph of the PBT resin, preferably a polyC₂₋₆alkylene glycol)] or a polyester obtained by using the polyether. Among these polyethers, a polyC₂₋₄alkylene glycol such as a polyoxyethylene glycol, a polyoxypropylene glycol, or a polyoxytetramethylene glycol is preferred. The polyester obtained by using the polyether may include a polyester of the polyether (e.g., a polyoxyalkylene glycol) and a dicarboxylic acid [usually, a non-aromatic dicarboxylic acid, e.g., an aliphatic or an alicyclic dicarboxylic acid and a reactive derivative thereof as exemplified in the paragraph of the PBT resin], and others.

Among these soft blocks, a polyester soft block having at least one unit selected from the group consisting of a polyether unit (an aliphatic polyether unit, a polyester unit obtained by using an aliphatic polyether) and an aliphatic polyester unit is preferred.

Concrete examples of the thermoplastic polyester elastomer include a polyester-based (that is, a polyesterpolyester-based) thermoplastic elastomer and a polyether-based (that is, a polyester-polyether-based) thermoplastic elastomer. The polyester-based elastomer includes, for example, a block copolymer of a hard segment that comprises an aromatic crystalline polyester [e.g., a polyC₂₋₄alkylene arylate (particularly, a homopolymer having a polybutylene terephthalate unit or a copolymer having a copolymerizable component (such as ethylene glycol or isophthalic acid)) or a liquid crystal polyester] and a soft segment that comprises an aliphatic polyester [e.g., a polyester of a C₂₋₆alkylene glycol (such as a polyethylene adipate or a polybutylene adipate) and a C₆₋₁₂alkanedicarboxylic acid]. The polyether based elastomer includes, for example, a block copolymer of a hard segment that comprises the aromatic crystalline polyester or the liquid crystal polyester and a soft segment that comprises a polyether such as a polyoxyC₂₋₄alkylene glycol such as a polytetramethyleneether glycol (e.g., a polyester of a polyoxyalkylene glycol and a dicarboxylic acid).

Among the polyester elastomers the preferred one includes a block copolymer of (1) a polyalkylene arylate hard block and (2) a polyester soft block that comprises a polycaprolactone, an aliphatic polyether having an oxyC₂₋₆alkylene unit (e.g., a polyC₂₋₆alkylene glycol), or an aliphatic polyester. The thermoplastic polyester elastomers may be used singly or in combination.

In the thermoplastic elastomer, the weight ratio of the hard segment (or hard component) relative to the soft segment (or soft component) [the former/the latter] is usually about 10/90 to 90/10, preferably about 20/80 to 80/20, and more preferably about 30/70 to 70/30 (for example, about 40/60 to 60/40).

In the purpose that requires flexibility (e.g., an electric wire covering), for example, the flexural modulus of the thermoplastic polyester elastomer is preferably in the range of not more than 1000 MPa, and preferably about 50 to 400 MPa

(particularly, about 100 to 300 MPa). In such a purpose, too small a flexural modulus causes some problems in the handling of the process. On the other hand, in the case of too a large flexural modulus, there is a possibility that enough flexibility cannot be obtained.

The invention provides a TPE-E composition, comprising from 1 to 30 % by weight of component A (diethylphosphinic acid aluminium salt), from 1 to 30 % by weight of component B (phosphonate oligomer, polymer or copolymer) and from 0 to 20 % by weight of component C (melamine derivative), and also from 20 to 98 % by weight of a thermoplastic polyester. Optionally, a small amount of an anti-dripping agent such as polytetrafluoro ethylene or similar fluoropolymers (e.g. ®Teflon products) may be present. Also, conventional auxiliaries and additives may be present, the entirety of the components by weight giving 100 % by weight.

Preference is given to a TPE-E composition, comprising from 5 to 25 % by weight of component A, from 1 to 20 % by weight of component B, from 0 to 15 % by weight of component C, and also from 40 to 94 % by weight of polyester. Also, if appropriate, conventional auxiliaries and additives, the entirety of the components by adding up to give a total composition of 100 % by weight

Particular preference is given to a TPE-E composition, comprising from 10 to 25 % by weight of component A, from 1 to 10 % by weight of component B, from 0 to 10 % by weight of component C, and also from 55 to 89 % by weight of polyester, and optionally glass fibers in the range from about 15 to about 30 % by weight, and also, if appropriate, conventional auxiliaries and additives, the entirety of the components adding up to give a total composition of 100 % by weight.

The invention also provides the use of the inventive flame retardant mixtures of components A, B, and optionally C, for providing flame retardancy to a variety of thermoplastic polyester elastomers, as described in the previous paragraphs.

It is contemplated that the flame retardant compositions of the present invention may comprise other components, such as fillers, lubricants, surfactants, organic binders, polymeric binders, crosslinking agents, coupling agents, anti-dripping agents such as fluoropolymers, heat and light stabilizers, antistatic agents, antioxidants, nucleating agents, carbodiimide colorants, inks, dyes, or any combination thereof. EP-A-0 584 567 gives examples for the additives which may be used.

The resin composition of the present invention may be a particulate mixture or a molten mixture or may be a molded product obtained by solidifying the molten mixture (e.g., a sheet- or film-like composition). The particulate mixture may be prepared by mixing the TPE-E resin with the phosphinic acid salt (A), and the phosphonate compound (B), and optionally, a melamine derivative (C) and one or more additives through a conventional manner.

There are many possible ways to mix the components, and the order of addition of each component can be in any sequence compatible with the desired mixing process.

An example of a method for incorporating components A, B, and C into a thermoplastic polyester premixes all of the constituents in the first step in the form of powder and/or pellets in a mixer, and then in the second step, the material is homogenized in the polymer melt in a compounding assembly (e.g. a twin-screw extruder). Optionally additional materials such as fillers are also added and mixed in the first step. The melt is usually drawn off in the form of an extrudate, cooled, and pelletized. Another example of mixing components A, B, and C and, optionally fillers and/or additional additives may also be introduced by way of a metering system directly into the compounding assembly in any desired order of sequence. It is preferred to add component B (phosphonate oligomer, polymer or copolymer), and if desired fillers, near the end of the extrusion process.

Another example of a method for incorporating components A, B and C is a process comprising once making pellets (master batches) different in formulation, mixing (diluting) the pellets in a certain ratio, and molding a product having a certain formulation from the resulting pellets, (3) a process comprising directly feeding components in a molding machine, and others. Incidentally, in the preparation of the composition to be used for the molded product, mixing and melt-kneading of a particulate of the resin component and other component(s) are advantageous to increase dispersion of other component(s).

The resin composition of the present invention may be melt-kneaded to mold a molded product with the use of a conventional manner such as an extrusion molding, an injection molding, or a compression molding. In addition, the resin composition can be preferably used for various purposes, for example, an electric or electronic device part, a mechanical device part, an automotive part, a packaging material, and a case.

In particular, the resin composition is useful for covering (or coating) an electric wire (including, for example, a conducting wire such as a copper wire or a platinum wire and a power transmission wire or a transmission (wave-transmission) wire such as an optical fiber cable, and others. Further, the resin composition can have suitable adhesion to an electric wire. Therefore, the resin composition is useful for covering (or coating) an electric wire (e.g., useful as a flame-retardant resin composition for covering an electric wire).

By covering (or coating) an electric wire with the resin composition, a covered electric wire can be produced. The process for covering (or coating) the electric wire is not particularly limited to a specific one, and may include a conventional covering (or coating) process, for example, a process for covering an electric wire with the use of an extrusion molding or a press processing. For example, if necessary, the covered electric wire may be produced by press processing an electric wire with holding the wire between the sheet- or film-like resin compositions.

The resin composition of the present invention or the molded product of the composition are suitable for, e.g., such a purpose as an electric or electronic device part, a mechanical device part, an automotive part, a packaging material or a case. The resin composition is particularly useful for covering an electric wire including a power-transmission wire or a transmission (wave-transmission) wire such as an optical fiber cable.

Thermoplastic polyester elastomers (TPE-E) which comprise the inventive flame retardant mixture and, if appropriate, comprise other additives, as defined below, are hereinafter termed elastomer compositions.

The amount of the phosphinic acid salt (component A) to be added to the elastomer compositions may vary within wide limits. The amount used is generally from 1 to 30 % by weight, based on the total elastomer composition. The ideal amount depends on the nature of the elastomer and on the type of components B and C, and on the character of the actual phosphinic acid salt used. Preferred amounts are from 5 to 25 % by weight, in particular from 10 to 25 % by weight, based on the total elastomer composition.

The physical form in which the abovementioned phosphinic salts are used for the inventive flame retardant and stabilizer combined can vary, depending on the type of polymer used and on the properties desired. By way of example, the phosphinic salts can be milled to give a fine-particle form to achieve better dispersion within the polymer. Mixtures of various phosphinic salts may also be used, if desired.

The amount of the phosphonate oligomer, polyphosphonate or copolyphosphonate (component B) to be added to the elastomer compositions may vary within wide limits. The amount used is generally from 1 to 30 % by weight, based on the total elastomer composition. The ideal amount depends on the nature of the elastomer, on the type of phosphinic salt (component A) used, and, optionally, on the type of nitrogen compound (component C) used. Amounts of from 1 to 20 % by weight, in particular from 1 to 10 % by weight, are preferred.

The amount of the nitrogen compound (component C), optionally to be added to the elastomer compositions may vary within wide limits. The amount used is generally from 0 to 20 % by weight, based on the total elastomer composition. The ideal amount depends on the nature of the elastomer and on the type of phosphinic salt (component A) used, on the type phosphonate oligomer, polyphosphonate or copolyphosphonate (component B) used, and on the type of nitrogen compound used. Amounts of from 0 to 15 % by weight, in particular from 0 to 10 % by weight, are preferred.

As described, in addition to the inventive flame retardant mixture composed of A, B, and C, it is also possible for fillers and reinforcing material, such as glass fibers, glass beads, or minerals, such as chalk, to be added to the molding compositions.

### EXAMPLES

### 1. Components Used

Commercially available thermoplastic polyester elastomers (pellets):
Hytrel® 4056 TPC-ET (DuPont Company), hereinafter termed HY 4056
(Shore D hardness 40)
Riteflex® 655 TPC unfilled (Ticona Engineering Polymers), hereinafter termed RF 655
(Shore D hardness 55)
Riteflex® 440 TPC unfilled (Ticona Engineering Polymers), hereinafter termed RF 440
(Shore D hardness 40)

| | |
|---|---|
| Component A: | Aluminum diethylphosphinate, hereinafter termed DEPAL. |
| ComponentB: | Can be synthesized by continuous or discontinuous reaction |
| B-1: | Polyphosphonate, hereinafter termed FRX-100 (using discontinuous reaction condition) |
| B-2: | Poly-phosphonate/carbonate-copolymer, ratio 85/15, hereinafter termed FRX-Co85 |

### Synthesis of Polyphosphonate B-1 (FRX-100):

Into 6 L reactor equipped with a distillation column and mechanical stirrer was placed the 2,2-bis-(4-hydroxyphenyl) propane (bisphenol A, 1.308 kg, 5.737 mol), 120 mg Sodium phenolate (NaOPh) catalyst, 1467 g (5.915 mol) methylphosphonic acid diphenyl ester and 225 mg tetraphenylphosphonium phenolate. The mixture was heated from 250 to 300 °C while reducing the pressure from 150 to 0.4 mm Hg over about 8 - 9 hours period. Approximately 1374 g of distillate was collected over the course of the reaction. A noticeable, rapid increase in solution viscosity of the melt was observed over the last hour of the reaction. At the end, the torque (as measurement of melt viscosity and therefore molecular weight) was 12.5 ± 0.4 at 300 °C with a stirrer speed of 110 rpm.

The polymer was extruded out of the reactor into a water bath to form a strand and subsequently pelletized. The polymer was transparent, colorless and tough. It exhibited a Tg of 102 °C. The product was not fully soluble in methylene chloride after 12 hours. The percentage of phosphorous in this polymer was 10.8 % by weight. The molecular weight was measured by gel permeation chromatography using a refractive index detector. Based on a polystyrene standard, the polyphosphonate exhibited a Mn of 9379, a Mw of 43480 and a polydispersity of 4.6.

### Synthesis of Polyphosphonate-polycarbonate B-2 (FRX CO 85:)

Into 6 L reactor equipped with a distillation column and mechanical stirrer was placed the 2,2-bis-(4-hydroxyphenyl) propane (bisphenol A, 1.308 kg, 5.737 mol), 450 mg tetraphenylphosphonium phenolate catalyst, 1467 g (5.915 mol) methylphosphonic acid diphenyl ester and 35.1 g (0.115 mol) 1,1,1 tris(4-hydroxyphenyl) ethane. The mixture was heated at 265 °C while reducing the pressure from 150 to 8 mm Hg over about 5 hours period to make oligo-phosphonate. Approximately 1038 g of distillate was collected over the course of this reaction. At the same time, in another 6 L reactor equipped also with a distillation column and mechanical stirrer was placed the 2,2-bis-(4-hydroxyphenyl) propane (bisphenol A, 262 g, 1.149 mol), 50 mg tetraphenylphosphonium phenolate catalyst, and 256 g (1.196 mol) of diphenyl carbonate. The mixture was heated at 250 °C while reducing the pressure from 500 to 10 mm Hg over about 2.5 hours period to make oligo- carbonate. Approximately 206 g of distillate was collected over the course of this reaction. The oligo-phosphonate was transferred to the oligo-carbonate reactor and these both oligomers were heated at 265 to 305 °C while reducing the pressure from 10 to 0.2 mm Hg over about 4 hours period. Approximately 206 g distillate was collected. A noticeable, rapid increase in solution viscosity of the melt was observed over the last hour of the reaction. At the end, the torque (as measurement of melt viscosity and therefore molecular weight) was 12.1 ± 2.5 at 300 °C with a stirrer speed of 110 rpm.

The polymer was extruded out of the reactor into a water bath to form a strand and subsequently pelletized. The polymer was transparent, yellow color and tough. It exhibited a Tg of 112 °C. The relative viscosity in methylene chloride was 1.302. The percentage of phosphorous in this polymer was 9.18 % by weight. The molecular weight was measured by gel permeation chromatography using a refractive index detector. Based on a polystyrene standard, the polyphosphonate exhibited a Mn of 14300, a Mw of 87700 and a polydispersity of 6.1.

| | |
|---|---|
| Component C: | Melapur® MC (melamine cyanurate), (Ciba Specialty Chemicals) |

Other additives: Dyneon® TF 2071 (polytetrafluoro ethylene), hereinafter termed PTFE

### 2. Preparation, Processing, and Testing of Flame-Retardant Elastomer Compositions

The flame retardant components were mixed in the ratio stated in the tables with the polymer pellets and optionally with additives/fillers, and incorporated at temperatures of from 180 to 240 °C in a twin-screw extruder (Leistritz ZSE 27 HP-44D). The homogenized polymer strand was drawn off, cooled in a water bath, and then pelletized.

After adequate drying, the molding compositions were processed in an injection molding machine (Arburg Allrounder 320 C) at melt temperatures of from 180 to 240 °C, to provide test specimens. Afterwards these specimen were tested and classified for flame retardancy according to the UL 94 vertical test.

Tensile strain at break was measured according to ISO 527-2/1A.
Shore hardness D scale values were determined according to ISO 868.

### 3. Test results

Table 1 shows comparative examples with neat TPE-E grades (not flame retarded), the corresponding TPE-E grade with one of the components A or B as sole flame retardants and with combinations A +C or B + C.

**Table 1 n.c.= non classifiable**

| Example # | 1 | 2 | 3 | 4 | 5 | | 6 | 7 |
|---|---|---|---|---|---|---|---|---|
| Hytrel 4056 | 100 | | | | | | | |
| RF 440 | | 100 | | 74.5 | 69.5 | 69.5 | | |
| RF 655 | | | 100 | | | | 79.5 | 79.5 |
| A | | | | 25 | | 20 | 20 | |
| B-1 | | | | | 20 | | | 20 |
| B-2 | | | | | | | | |
| C | | | | | 10 | 10 | | |
| PTFE | | | | 0.5 | 0.5 | 0.5 | 0.5 | 0.5 |
| Total FR content (A+B+C+PTFE) | | | | 25.5 | 30.5 | 30.5 | 20.5 | 20.5 |
| UL 94 class | n.c. | n.c. | n.c. | V-1 | n.c. | V-1 | V-0 | V-2 |
| Tensile strain at break [%] | 580 | 690 | 320 | 520 | 580 | 490 | 230 | 260 |
| Shore D | 40 | 40 | 55 | 38 | 49 | 40 | 55 | 60 |

Table 2 shows inventive examples with mixtures of the type A+B or, optionally A+B+C.

**Table 2**

| Example # | 8 | 9 | 10 | 11 | 12 |
|---|---|---|---|---|---|
| Hytrel 4056 | 77.0 | | | 74.0 | |
| RF 440 | | 76.0 | 76.0 | | |
| RF 655 | | | | | 81.0 |
| A | 20.5 | 21.5 | 21.5 | 18.5 | 16.5 |
| B-1 | | 2.0 | | 2.0 | 2.0 |
| B-2 | 2.0 | | 2.0 | | |
| C | | | | 5.0 | |
| PTFE | 0.5 | 0.5 | 0.5 | 0.5 | 0.5 |
| Total FR content (A+B+C+PTFE) | 23.0 | 24.0 | 24.0 | 26.0 | 19.0 |
| UL 94 class | V-0 | V-0 | V-0 | V-0 | V-0 |
| Tensile strain at break [%] | 550 | 610 | 610 | 470 | 240 |
| Shore D | 39 | 39 | 39 | 40 | 56 |

The results of the inventive examples 8 - 12, in which the flame retardant combinations of the present invention are used, show that the class V-0 is achieved by these combinations in the UL 94 test, whereas it is not obtained with the sole flame retardants or most of the combinations of the comparative examples. Specimens from examples 4 - 12 did not show any dripping during or after the flame exposures, whereas burning drips were observed in comparative examples 1 - 3. Component A achieves a V-0 class in the TPE-E resin RF 655 (example 6) but the tensile strain at break is greatly reduced and the hardness is increased indicating more brittle behavior. The combination A + B-1 (examples 9 and 12) are more effective with regard to total flame retardant content, both providing V-0 in the UL 94 test. Apart from showing enhanced flame retardancy, the inventive combinations in nearly all cases exhibit mimimal effect on important mechanical properties, especially if a TPE-E of lower Shore D hardness is used. This is exemplified in the tables by values of tensile strength at break. The Shore D hardness of the flame retarded materials remains nearly unchanged compared to the non flame retarded resins.

## Claims

1. A plastic molding composition comprising a thermoplastic polyester elastomer having a shore hardness (D) ranging from 40 to 55 which is measured according to ISO 868, a phosphinate salt which is aluminium diethylphosphinate, and a phosphonate component which is a polymer or oligomer prepared from diphenylmethylphosphonate and 2,2-bis(4-hydroxyphenyl)propane.

2. The composition of claim 1 wherein the composition further comprises melamine, a melamine derivative or a melamine salt or combinations thereof.

3. The composition of claim 2 wherein the phosphonate component has a phosphorus content of at least 2 % by weight.

4. The composition of claim 2, wherein the melamine salt or derivative is melamine cyanurate.

5. The composition of claim 1, wherein the phosphonate component is a phosphonate/carbonate-copolymer or co-oligomer with a weight ratio of phosphonate to carbonate ranging from 95 % to 5 % to 60 % to 40 %.

6. The composition of claim 2 further comprising at least one additional component selected from the group consisting of glass fiber, carbon fiber, inorganic fiber, organic fiber, fillers, surfactants, organic binders, polymeric binders, crosslinking agents, coupling agents, anti-dripping agents, colorants, inks, dyes, antioxidants or any combination thereof.

7. An article of manufacture comprising the composition of claim 6.

8. An article of manufacture of claim 7, wherein the article is a fiber, a film, a coating, a molding, a foam, a fiber reinforced article, or any combination thereof.

## Patentansprüche

1. Kunststoff-Formmasse, die ein thermoplastisches Polyesterelastomer mit einer nach ISO 868 bestimmten Shore-D-Härte im Bereich von 40 und 55, ein Phosphinatsalz, bei dem es sich um Aluminiumdiethylphosphinat handelt, und eine Phosphonatkomponente umfasst, die ein Polymer oder Oligomer ist, das aus Diphenylmethylphosphonat und 2,2-Bis(4-hydroxyphenyl)propan hergestellt ist.

2. Formmasse nach Anspruch 1, wobei die Zusammensetzung ferner Melamin, ein Melaminderivat oder ein Melaminsalz oder Kombinationen daraus umfasst.

3. Formmasse nach Anspruch 2, wobei die Phosphonatkomponente einen Phosphorgehalt von mindestens 2 Gewichts-% aufweist.

4. Formmasse nach Anspruch 2, wobei das Melaminsalz oder -derivat Melamincyanurat ist.

5. Formmasse nach Anspruch 1, wobei die Phosphonatkomponente ein Phosphonat/Carbonat-Copolymer oder -Co-Oligomer mit einem Gewichtsverhältnis von Phosphonat zu Carbonat im Bereich zwischen 95 % zu 5 % und 60 % zu 40 % ist.

6. Formmasse nach Anspruch 2, ferner umfassend mindestens eine zusätzliche Komponente, die aus der Gruppe ausgewählt ist, die aus Glasfaser, Kohlefaser, anorganischer Faser, organischer Faser, Füllstoffen, oberflächenaktiven Stoffen, organischen Bindemitteln, polymeren Bindemitteln, Vernetzungsmitteln, Kopplungsmitteln, Anti-Dripping-Mitteln, Farbmitteln, Farben, Farbstoffen, Antioxidantien oder jeder beliebigen Kombination daraus besteht.

7. Erzeugnis, das die Zusammensetzung nach Anspruch 6 umfasst.

8. Erzeugnis nach Anspruch 7, wobei das Erzeugnis eine Faser, ein Film, eine Beschichtung, ein Formartikel, ein Schaum, ein faserverstärktes Erzeugnis oder jede beliebige Kombination daraus ist.

## Revendications

1. Composition de moulage plastique comprenant un élastomère de polyester thermoplastique possédant une dureté Shore (D) dans la plage de 40 à 55 qui est mesurée selon la norme ISO 868, un sel de phosphinate qui est le diéthylphosphinate d'aluminium, et un composant de phosphonate qui est un polymère ou un oligomère préparé à partir du diphénylméthylphosphonate et du 2,2-bis(4-hydroxyphényl)propane.

2. Composition selon la revendication 1, la composition comprenant en outre de la mélamine, un dérivé de mélamine ou un sel de mélamine ou des combinaisons correspondantes.

3. Composition selon la revendication 2, le composant de phosphonate possédant une teneur en phosphore d'au moins 2 % en poids.

4. Composition selon la revendication 2, le sel ou dérivé de mélamine étant le cyanurate de mélamine.

5. Composition selon la revendication 1, le composant de phosphonate étant un copolymère ou cooligomère phosphonate/carbonate doté d'un rapport pondéral de phosphonate à carbonate dans la plage allant de 95 % à 5 % jusqu'à 60 % à 40 %.

6. Composition selon la revendication 2 comprenant en outre au moins un composant supplémentaire choisi dans le groupe constitué par les fibres de verre, les fibres de carbone, les fibres inorganiques, les fibres organiques, les charges, les tensioactifs, les liants organiques, les liants polymériques, les agents de réticulation, les agents de couplage, les agents anti-égouttement, les colorants, les encres, les teintures, les antioxydants et une quelconque combinaison correspondante.

7. Article de fabrication comprenant la composition selon la revendication 6.

8. Article de fabrication selon la revendication 7, l'article étant une fibre, un film, un revêtement, un moulage, une mousse, un article renforcé par des fibres, ou une quelconque combinaison correspondante.
